# FASCICULE DE BREVET EUROPEEN

(11) **EP 1 938 408 B1**
(45) Date de publication et mention de la délivrance du brevet: **23.02.2011**
(21) Numéro de dépôt: 06807099.4
(22) Date de dépôt: 09.10.2006
(51) Int. Cl.: H01M 8/02, C04B 30/00, C03C 8/00, C04B 41/00

(54) **JOINT SOLIDE OBTENU PAR PROJECTION THERMIQUE**
MITTELS THERMISCHEM SPRÜHEN ERHALTENE FESTDICHTUNG
SOLID SEAL WHICH IS OBTAINED BY MEANS OF THERMAL SPRAYING

(30) Priorité: 11.10.2005 FR 0553094
(43) Date de publication de la demande: 02.07.2008
(73) Titulaire: Commissariat à l'Énergie Atomique et aux Énergies Alternatives, 75015 Paris (FR)
(72) Inventeur: BIANCHI, Luc, F-37260 Artannes Sur Indre (FR); TOULC'HOAT, Joël, F-37300 Joue Les Tours (FR); BORIES, Charles, F-37300 Joue Les Tours (FR)
(74) Mandataire: Poulin, Gérard
(86) Numéro de dépôt international: PCT/EP2006/067213
(87) Numéro de publication internationale: WO 2007/042505

(56) Documents cités:
- EP-A- 0 415 217
- EP-A- 1 737 059
- WO-A-2004/002655
- DE-A1- 3 631 536
- GB-A- 2 217 349
- US-A- 5 725 955
- US-B1- 6 541 146

## Description

### DESCRIPTION

### DOMAINE TECHNIQUE

L'invention concerne le domaine des joints et scellements fonctionnant à haute température avec une application particulière, mais non exclusive, au cas des piles à combustible à oxyde solide (SOFC pour « Solid Oxyde Fuel Cells ») pour lesquelles la température de fonctionnement est typiquement comprise entre 600 et 1000°C.

### ÉTAT DE LA TECHNIQUE ANTÉRIEURE

Une pile à combustible est un dispositif dans lequel un premier réactif, un combustible tel que l'hydrogène, réagit électrochimiquement avec un second réactif, un oxydant tel que l'oxygène, pour produire un courant électrique continu et de la chaleur. Une cellule de pile à combustible est constituée de deux électrodes poreuses et conductrices électroniques: une anode et une cathode séparées par un électrolyte isolant électronique mais conducteur ionique (solide dans le cas des SOFC). L'anode est généralement constituée d'un cermet (association d'une céramique et d'un métal) nickel - zircone, la cathode de manganite de lanthane dopée. Le matériau d'électrolyte le plus couramment utilisé est la zircone dopée à l'yttrine.

Dans une SOFC, l'oxygène réagit à la cathode avec des électrons pour donner des ions oxydes qui migrent à travers l'électrolyte jusqu'à l'anode. Le combustible injecté à l'anode réagit avec les ions oxydes pour former de l'eau et des électrons. Les électrons circulent de l'anode à la cathode en traversant un circuit électrique externe.

Chaque cellule élémentaire composée d'une anode, d'un électrolyte et d'une cathode ne produit guère plus d'un volt. Pour atteindre des tensions plus élevées qui facilitent la conversion de puissance en aval de la pile à combustible, plusieurs cellules sont connectées électriquement en série et regroupées en batteries (« stacks » en anglais). Une batterie de cellules est constituée de plusieurs cellules séparées par des plaques dites « bipolaires » ou « interconnecteurs ». L'interconnecteur est conducteur électronique et est disposé entre l'anode et la cathode de deux cellules adjacentes. Cet interconnecteur permet de collecter le courant et dans certains cas de distribuer les gaz aux électrodes.

Une des difficultés majeures relatives à l'exploitation de générateurs de courant de type pile à combustible solide (SOFC) est la gestion de l'étanchéité entre les deux réseaux de gaz, combustible (hydrogène) et oxydant (air) qui, si elle n'est pas assurée correctement, peut conduire à des réaction de combustion interne dans la pile, rédhibitoires pour un fonctionnement optimal.

Les joints couramment utilisés pour les assemblages étanches dans les empilements SOFC sont parfois solides avec en particulier l'utilisation de feuilles de mica, mais le plus souvent sous la forme de compositions vitreuses ou de mélanges verre - céramiques pâteux (du fait de leur dispersion dans un solvant et/ou liant organique) pour la mise en oeuvre sur les parties à assembler et qui se consolident par cristallisation ou frittage à la température de fonctionnement des SOFC.

Ce dernier type de joint est en général fragile et peu, approprié pour accommoder les différences de coefficients de dilatation des différents constituants des empilements SOFC, avec pour conséquences des problèmes de fissuration en service et de mauvaise résistance au cyclages thermiques.

Quelques alternatives ont été proposées pour s'affranchir de ces difficultés. Elles convergent pour la plupart vers des joints à base de fibres céramiques imprégnées de particules de céramique et/ou de verre qui conservent ainsi une certaine élasticité à la température de fonctionnement et sont plus compatibles avec les cyclages thermiques imposés aux cellules SOFC. On peut se référer à ce sujet aux documents WO-A-02/17416, US-A-6 271 158 et US-A-6 541 146.

De par la nature pâteuse des joints, les procédés de mise en forme des joints sur les pièces à assembler, permettant un assez bon contrôle de l'épaisseur, sont généralement de la sérigraphie ou de la pulvérisation pneumatique tels que décrit dans le document WO-A-99/54131. Dans le cas des joints fibreux, une pré-compaction mécanique permet dans certains cas de fabriquer des joins auto-structurants.

Les dépôts céramiques mis en oeuvre par projection plasma, pour des raisons intrinsèques au procédé, présentent une microstructure lamellaire largement microfissurée, induite par l'empilement de particules élémentaires venant impacter la pièce à revêtir. On peut se référer à ce sujet à l'article « La projection plasma : une revue » de P. FAUCHAIS et al., Ann. Phys. Fr., 14 (1989), pages 261 à 310. Les revêtements ainsi obtenus présentent classiquement une porosité totale de l'ordre de 10%, majoritairement ouverte du fait de l'interconnexion tridimensionnelle d'un réseau de fissures. Ce réseau est ici la conséquence directe de la relaxation de contraintes produites lors du refroidissement brutal des particules au contact du substrat et accessoirement par des défauts d'empilement. Il en résulte un défaut d'étanchéité des dépôts mis en oeuvre par projection plasma.

Des dépôts étanches aux gaz peuvent toutefois être réalisés par projection plasma dans le cadre particulier des applications SSCCs (pour « Self Sealing Ceramic Coatings ») destinés à la protection anti-corrosion de pièces métalliques. Le principe est ici de former dans le dépôt de la porosité fermée en activant des réactions d'oxydation des matériaux constitutifs du revêtement pour former des oxydes stables avec augmentation de volume qui a pour effet de boucher le réseau de fissures qui interconnecte les pores. On peut se référer à ce sujet aux documents DE-A-36 31 536 et GB-A-2 217 349.

### EXPOSÉ DE L'INVENTION

Un objet de la présente invention consiste en un élément en matériau composite présentant une surface pourvue d'une barrière étanche aux gaz.

Un autre objet de la présente invention consiste en un joint solide procurant une étanchéité efficace.

Un autre objet de la présente invention consiste à fournir un joint solide étanche différent de ceux de l'art connu.

Il est ici proposé un joint solide à matrice céramique, chargée de particules de verre ou de fondant céramique, mis en oeuvre par projection thermique. On peut ainsi réaliser une étanchéité efficace entre deux couches composant une pile à combustible solide de type SOFC. Le joint solide peut par exemple être mis en oeuvre par projection plasma sur une ou deux faces des couches à assembler. Le joint est solide, non déformable et adhérent sur son support à température ambiante. Il se forme et acquiert ses propriétés lors de la mise en service en température de la SOFC grâce à un mécanisme de migration de la phase vitreuse par capillarité dans le volume de la matrice céramique, préférentiellement vers l'interface à assembler.

Les mécanismes mis en oeuvre dans le joint étanche selon la présente invention diffèrent fondamentalement de ceux mis en oeuvre dans les documents DE-A-36 31 536 et GB-A-2 217 349 cités ci-dessus dans la mesure où, pour la présente invention, ce ne sont pas des réactions chimiques dans le volume du dépôt qui sont recherchées et produites, mais une migration de la seconde phase vitreuse par capillarité au sein du réseau de microfissures avec pour double effet d'une part d'étancher le dépôt dans son volume et d'autre part de napper la surface de la matrice céramique pour assurer la fonction de jointoiement avec la surface en regard.

L'invention a donc pour objet un élément en matériau composite, le matériau composite comprenant une matrice micro-fissurée sous la forme d'un réseau interconnecté tridimensionnel de micro-fissures ouvert sur la surface de la matrice, un matériau d'ajout constitué d'au moins un matériau choisi parmi un fondant céramique, un verre, un métal et un alliage métallique étant dispersé dans la matrice, le matériau d'ajout étant un matériau qui, lorsque le matériau composite est porté à une température déterminée, ramollit et migre par capillarité dans le réseau de micro-fissures vers ladite surface de l'élément, la quantité de matériau d' ajout dispersé initialement dans la matrice étant en proportion suffisante par rapport à la matrice pour venir napper une surface laissée ouverte de l'élément en matériau composite et y créer une barrière étanche aux gaz.

La matrice est constituée d'au moins un matériau choisi parmi les oxydes métalliques, les carbures, les nitrures, les siliciures , les borures, les métaux et les alliages métalliques.

L'élément en matériau composite peut comprendre entre 5 % et 85 % en poids de matériau d'ajout.

Ladite température déterminée peut être une température comprise dans la gamme allant de 100°C à 1500°C.

L'invention a aussi pour objet un joint solide constitué à partir d'un élément en matériau composite tel que défini ci-dessus, cet élément en matériau composite ayant été porté à ladite température déterminée pour qu'une nappe de matériau d'ajout recouvre ladite surface laissée ouverte.

Dans ce joint solide, l'élément en matériau composite peut être un élément initialement déposé de manière adhérente par projection thermique sur une première pièce, la nappe de matériau d'ajout recouvrant ladite surface laissée ouverte pour assurer ladite barrière étanche aux gaz avec une deuxième pièce en vis-à-vis de cette surface laissée ouverte. L'élément en matériau composite peut aussi être un élément auto-structurant, c'est-à-dire un élément présentant initialement une surface laissée ouverte pour une première pièce à joindre et une surface laissée ouverte pour une deuxième pièce à joindre, une nappe de matériau d'ajout recouvrant les surfaces laissées ouvertes pour assurer une barrière étanche aux gaz avec chacune des deux pièces.

L'invention a encore pour objet un procédé de fabrication d'un joint solide étanche entre une première pièce et une deuxième pièce, comprenant :
- une étape de fabrication d'un élement en matériau composite tel que défini ci-dessus, par projection thermique d'un matériau destiné à former la matrice céramique et d'un matériau destiné à former le matériau d'ajout, sur au moins une surface de réception de la première pièce,
- une étape de placement d'une surface de ladite deuxième pièce en vis-à-vis de ladite surface laissée ouverte de l'élément en matériau composite,
- une étape de mise de l'élément en matériau composite à ladite température déterminée pour obtenir le nappage de ladite surface laissée ouverte, ledit nappage venant adhérer à la surface de ladite deuxième pièce placée en vis-à-vis.

L'invention a encore pour objet un procédé de fabrication d'un joint solide étanche entre une première pièce et une deuxième pièce, comprenant :
- une étape de fabrication d'un élément en matériau composite tel que défini ci-dessus, par projection thermique d'un matériau destiné à former la matrice céramique et d'un matériau destiné à former le matériau d'ajout, sur au moins une surface de réception, la surface de réception étant une interface de démoulage permettant la récupération de l'élément en matériau composite,
- une étape de récupération de l'élément en matériau composite,
- une étape d'interposition de l'élément en matériau composite, récupéré à l'étape de récupération, entre une première surface de la première pièce et une deuxième surface de la deuxième pièce, la première surface et la deuxième surface étant vis-à-vis,
- la mise de l'élément en matériau composite à ladite température déterminée pour obtenir les nappages des surfaces de l'élément en matériau composite laissées ouvertes, lesdits nappages venant adhérer à la première surface de la première pièce d'une part et à la deuxième surface de la deuxième pièce d'autre part. matrice céramique et d'un matériau destiné à former la matériau d'ajout, sur au moins une surface de réception.

La projection thermique peut être choisie parmi les techniques de projection plasma, de projection par flamme oxyacéthylénique, de projection HVOF (de l'anglais "High Velocity Oxy Fuel"), de projection HVAF (de l'anglais "High Velocity Air Fuel"), de projection par canon à détonation, de projection par arc fil et arc poudre, de projection par plasma d'arc à courant continu, de projection par plasma inductif, de projection dynamique à froid (ou "Cold Spray" en anglais) et une combinaison d'au moins deux de ces techniques.

Un matériau porogène peut également être projecté au cours de l'étape de projection thermique.

Une pression peut être exercée entre la première et la deuxième pièce, tendant à rapprocher la première surface de la première pièce de la deuxième surface de la deuxième pièce, lors de la mise à la température déterminée, afin d'améliorer l'adhérence du nappage ou des nappages.

### BRÈVE DESCRIPTION DES DESSINS

L'invention sera mieux comprise et d'autres avantages et particularités apparaîtront à la lecture de la description qui va suivre, donnée à titre d'exemple non limitatif, accompagnée des dessins annexés parmi lesquels :
- la figure 1 est une vue en coupe transversale d'un joint en matériau composite selon la présente invention, avant mise en température ;
- la figure 2A représente le joint de la figure 1 après mise en température pour une utilisation comme joint étanche ;
- la figure 2B représente le joint de la figure 1 après retour à la température ambiante ;
- la figure 3 est une vue en coupe transversale d'un joint étanche selon l'invention, déposé sur un premier élément et assurant une étanchéité avec un deuxième élément à assembler ;
- la figure 4 est une vue en coupe transversale d'un joint plasmaformé selon l'invention et assurant une étanchéité pour deux éléments, à assembler ;
- La figure 5 est une vue en coupe transversale d'une partie d'une pile à combustible à oxyde solide comprenant un joint étanche selon la présente invention.

### EXPOSÉ DÉTAILLÉ DE MODES DE RÉALISATION PARTICULIERS

L'invention concerne un joint solide fonctionnant à haute température, mis en oeuvre par projection plasma et applicable en particulier, mais pas de façon exclusive, au cas de l'assemblage étanche d'éléments de piles à combustible de type SOFC. La plage de température de fonctionnement dans le cas de l'application SOFC est de 600 à 1000°C incluant des conditions de cyclage thermique de la température ambiante à la température maximale d'utilisation.

Dans la présente description, les termes « céramique », « verre » ou « fondant » seront utilisés pour des matériaux inorganiques non métalliques et solides présentant des liaisons de type covalentes ou ioniques. Cela inclut les oxydes métalliques et de façon générique tous les matériaux non oxyde de type carbure, nitrure, siliciure, borure et autres ainsi que tous les mélanges ou composés définis obtenus à partir de ces constituants. Un verre se différenciera d'une céramique par son degré de cristallisation.

Les termes « microfissure » et/ou « réseau de microfissures » appliqués aux cas des dépôts plasma de céramiques concernent les fissures qui se développent du fait de la relaxation de contraintes thermiques, schématiquement dans un plan perpendiculaire à la direction de croissance du dépôt entre les particules étalées (lamelles) et parallèlement à la direction de croissance du dépôt à l'intérieur des lamelles, pour former un réseau de porosité ouverte interconnectée dans le volume du revêtement. Les dimensions caractéristiques de ces fissures observables en coupe transversale sur un revêtement sont de l'ordre de 0,1 µm à 1 µm de large, cette gamme pouvant varier en fonction de la nature du matériau projeté et des conditions de mise en forme. Les défauts d'empilement des particules lors de la construction du dépôt sont pour leur part responsables de la formation de "porosités fermées" d'allure circulaire et de dimension généralement supérieure au micromètre voire à la dizaine de micromètres. Cette terminologie est communément admise par l'homme du métier.

Le terme "plasmaformage" se rapporte à une variante du procédé de dépôt par projection thermique pour laquelle, via une interface d'aide au démoulage, le dépôt réalisé sur son substrat peut être décollé pour donner lieu à une couche mince auto-structurante, manipulable et usinable, reproduisant la géométrie du substrat sur laquelle elle a été mise en forme.

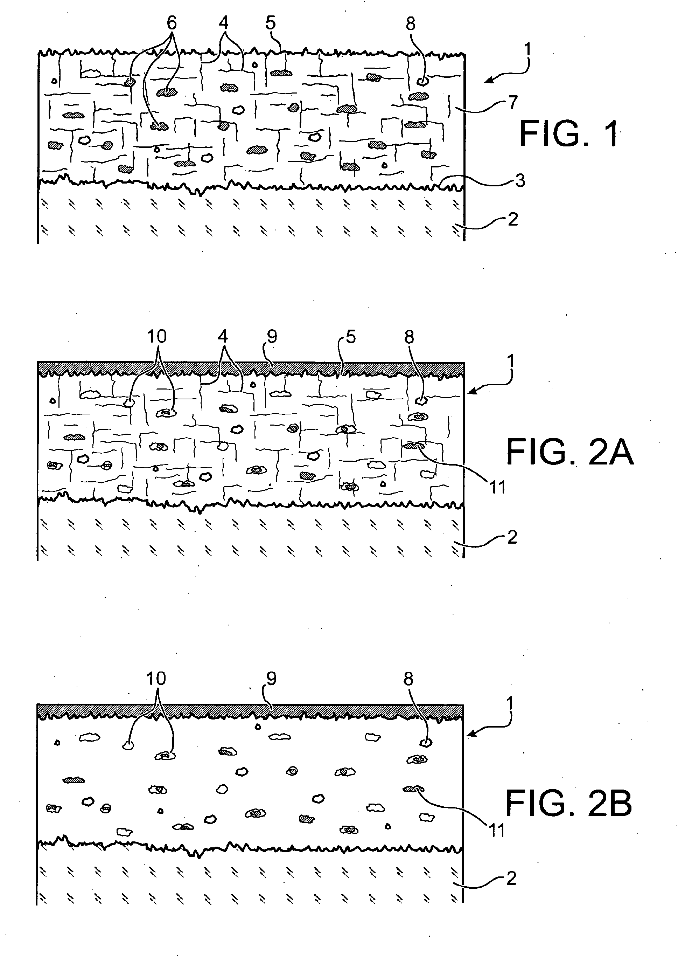

Le joint inventé se caractérise par un dépôt plasma composite composé d'une matrice céramique dans laquelle se trouve dispersées des particules d'un fondant céramique ou verre que l'on appellera par la suite "matériau d'ajout". Le dépôt ou joint solide ainsi obtenu présente la microstructure caractéristique décrite schématiquement sur la figure 1.

La figure 1 montre, en coupe transversale, un élément en matériau composite 1 déposé, par une technique de dépôt plasma, sur un substrat 2 qui peut être métallique, semiconducteur ou céramique. La surface 3 du substrat 2 sur laquelle est déposé le matériau composite est une surface rugueuse qui permet un bon accrochage du matériau composite.

Comme classiquement observé pour les dépôts plasma de céramiques, la matrice est ici largement micro-fissurée. C'est ce réseau tridimensionnel de fissures 4 interconnectées et ouvert sur la surface 5 du revêtement qui est mis à profit pour une migration par capillarité du matériau d'ajout vers la surface du matériau pour former le joint. Cette migration est rendue possible dès lors que la température d'utilisation du joint permet un ramollissement du matériau d'ajout conduisant à une viscosité suffisamment faible et qu'aucune réaction limitante entre le matériau d'ajout et la matrice n'intervient. Ce sont ces derniers critères qui conditionnent le choix du couple matériau de matrice - matériau d'ajout.

L'obtention du réseau de micro-fissures nécessaire à la migration du matériau d'ajout, s'il n'est pas obtenu directement du fait du procédé de mise en oeuvre, comme lors de la projection par plasma d'une céramique par exemple, pourra être créé « artificiellement » en particulier par l'utilisation d'agents porogènes couplés à la projection de la matrice.

La vue en coupe de la figure 1 montre du matériau d'ajout 6 dispersé dans la matrice céramique 7 et également des vides 8 dus à la porosité fermée naturelle du matériau déposé thermiquement.

L'évolution micro-structurale observée sur un échantillon de joint après utilisation à 900°C ou plus généralement dans la gamme de température compatible du couple matrice - matériau d'ajout et permettant d'expliquer les mécanismes de fonctionnement du joint est présentée sur les figures 2A et 2B.

Le fait de porter le joint à sa température de fonctionnement permet un ramollissement suffisant du matériau d'ajout, alors que la matrice céramique ne subit aucune modification, pour que celui-ci puisse migrer par capillarité dans le réseau de micro-fissures vers la surface libre de la matrice qui va être nappée par l'excès de matériau d'ajout.

La figure 2A montre que la surface libre 5 de l'élément en matériau composite 1 est recouverte d'une couche de fondant 9. Il reste dans le matériau composite des porosités fermées 10 avec ou sans résidu de fondant, des particule de fondant résiduelles 11 et des porosités fermées naturelles 8. Le réseau de micro-fissures 4 est rempli de fondant.

Après refroidissement et du fait du faible contraste optique du fondant et de la matrice céramique, les micro-fissures caractéristiques de la matrice, et remplies par le matériau d'ajout ne sont plus visibles et seule subsiste une porosité fermée résiduelle produite soit par la présence initiale de porosités fermées dues à des défauts d'empilement de particules lors de la construction du revêtement soit par la présence de cavités qui contenaient initialement les particules du matériau d'ajout et qui se sont partiellement voir totalement vidées du fait de la migration du matériau d'ajout dans les micro-fissures vers la surface du dépôt. Ces cavités peuvent ainsi être assimilées à des "réservoirs" de matériau d'ajout. Le remplissage des micro-fissures par le matériau d'ajout lors de la mise en service en température présente également l'avantage de rendre étanche au gaz la matrice céramique initialement micro-fissurée. C'est ce que monte la figure 2B.

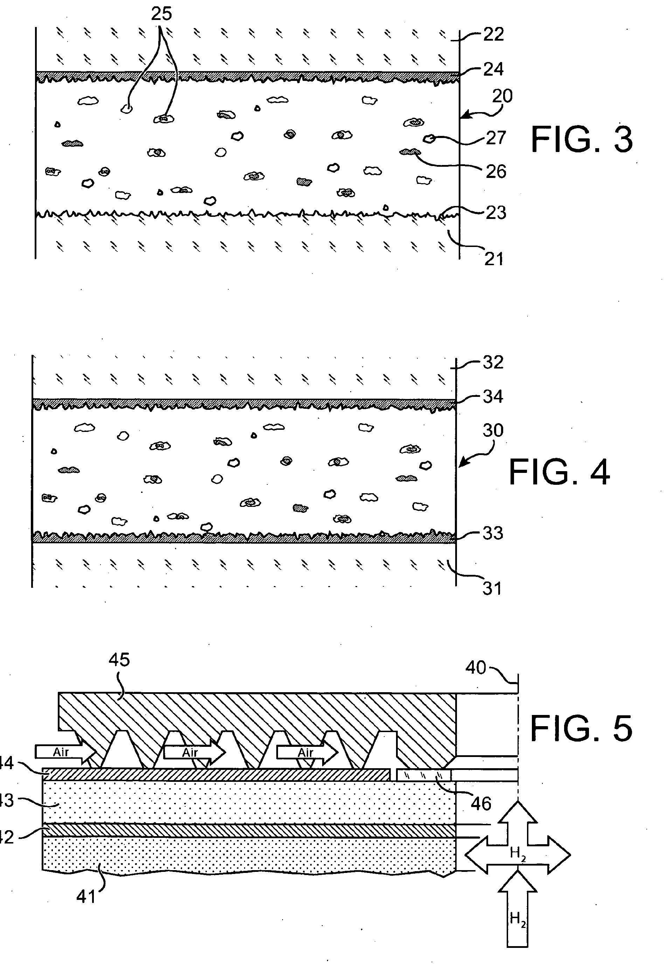

La figure 3 est une vue en coupe transversale d'un joint étanche selon l'invention, déposé sur un premier élément et assurant une étanchéité avec un deuxième élément à assembler. C'est la couche de matériau d'ajout ayant migré à la surface de la matrice céramique qui est mise à profit pour créer une barrière étanche au gaz lorsque le joint est mis en contact avec une surface à assembler.

Dans l'exemple de mise en oeuvre de la figure 3, le joint 20 est projeté, par exemple par plasma, sur la surface rugueuse 23 de l'un des deux éléments à assembler, par exemple sur l'élément 21. Le deuxième élément 22 est ensuite mis en contact direct avec la surface libre du joint 20. Afin de garantir un contact intime entre cette deuxième pièce et le joint, une charge peut être appliquée. L'ensemble est alors porté à la température de fonctionnement du joint produisant ainsi la migration par capillarité du matériau d'ajout vers la surface de la matrice céramique. Par écoulement visqueux du matériau d'ajout à la température de fonctionnement, ce dernier viendra ainsi combler les interstices dus aux défauts de contacts entre le joint 20 et le deuxième élément 22 pour former une couche barrière 24 étanche au gaz. On reconnaît dans le joint 20, des porosités fermées 25 avec ou sans résidu de fondant, des particules de fondant résiduelles 26 et des porosités fermées naturelles 27.

L'épaisseur de la couche de matériau d'ajout formant cette barrière étanche sera directement liée à l'état de surface du joint et de l'élément en vis-à-vis ainsi qu'à la nature même et à la microstructure de surface des matériaux en contact. Cette épaisseur peut être de l'ordre du micromètre jusqu'à plusieurs dizaines de micromètres pour des états de surface des pièces au contact lisses ou rugueux.

Dans l'exemple précédent, le joint est déposé par projection plasma sur une des deux surfaces planes à assembler, l'autre surface étant ensuite mise directement au contact du joint. Le caractère solide et manipulable du joint induit par la matrice céramique ne restreint pas son utilisation à ce type de configuration. Ainsi, la capacité d'obtenir par plasmaformage un joint auto-structurant avec des épaisseurs typiquement comprises dans la gamme 50 µm à plusieurs millimètres autorise une insertion directe du joint entre les deux surfaces à assembler. Dans ce cas, le matériau d'ajout, lors de la mise en température du joint, viendra napper les deux surfaces libres de la matrice pour assurer l'étanchéité tel que schématisé sur la figure 4.

Sur la figure 4, le joint plasmaformé 30 relie les surfaces planes en regard des éléments 31 et 32 grâce aux couches barrière au gaz 33 et 34 formées à partir du fondant.

Les formes accessibles pour le joint ne se limitent ainsi pas à des structures planes mais peuvent être étendues à tous types de géométries tridimensionnelles accessibles par projection plasma. On peut citer à titre d'exemples des revêtements sur des tubes, des surfaces concaves ou convexes ou bien une combinaison de ces géométries.

Du fait des mécanismes de migration d'un matériau d'ajout visqueux à la température d'utilisation, le joint autorise des assemblages métal-métal, céramique-céramique et céramique-métal, indifféremment de leur état de surface.

Le joint pourra indifféremment être déposé sur une des deux surfaces à assembler, sur les deux surfaces ou bien être inséré sous forme auto-structurante entre les deux surfaces.

Un exemple va maintenant être donné dans le cas de l'application SOFC pour laquelle un joint a été déposé sous la forme d'un anneau de 20 mm de diamètre intérieur et 30 mm de diamètre extérieur pour une épaisseur de 150 µm sur un empilement plan de cellules pour séparer le réseau d'hydrogène du réseau d'air selon la configuration décrite sur la figure 5.

La figure 5 est une coupe transversale d'une partie d'une pile à combustible. Seule la partie située à gauche de l'axe de symétrie a été représentée. Elle montre un diffuseur 41 de gaz anodique poreux, une électrode cermet 42, un électrolyte céramique dense 43, une cathode céramique poreuse 44 et une plaque bipolaire métallique 45. Un joint étanche et annulaire 46, centré sur l'axe 40, est disposé entre les surfaces de l'électrolyte 43 et de la plaque bipolaire 45. Le joint 46 est mis en forme par projection plasma sur la plaque bipolaire métallique 45 et mis en contact de l'électrolyte 43 en zircone yttrée. Une charge de 200 g.cm⁻² est appliquée sur cet empilement et la température de fonctionnement est fixée à 900°C.

La matrice céramique du joint utilisé est de la zircone yttriée (8% molaire) et la matériau d'ajout est un fondant céramique de référence C 105, disponible auprès de la société DMC² France S.A., et incorporé à raison de 20% en masse dans la matrice.

Dans ces conditions, les performances obtenues pour un empilement de 5 cellules sont identiques à celles obtenues pour des monocellules SOFC du même type testées dans une configuration ne nécessitant pas de séparation des deux réseaux de gaz. De plus, une analyse post-mortem des cellules de l'empilement ne révèle aucune trace de combustion interne entre l'air et l'hydrogène pouvant être imputé à un dysfonctionnement du joint.

Des mesures réalisées sur ce joint dans des conditions expérimentales identiques à celles de l'empilement, à 900°C en utilisant de l'azote conduisent à un taux de fuite de 4,2 10⁻³ mbar.l/s pour une perte de charge imposée de 70 mbars.

Le joint selon l'invention présente de nombreux avantages en dehors du fait de créer une barrière étanche aux gaz. La proportion volumique de matériau dans la matrice peut être modulée dans une large mesure en fonction des applications tant que le caractère structurant de la matrice n'est pas altéré. Le joint solide obtenu est usinable et inerte à la température ambiante et se forme à la température de fonctionnement. Du fait de la nature visqueuse du fondant en surface de la matrice céramique, le joint est en mesure d'accommoder, dans une certaine mesure, les déformations et légers déplacements des éléments à assembler lors de la mise en température. Du fait de la faible épaisseur à combler entre la matrice céramique et la surface de l'élément à assembler, le joint permet de minimiser la surface potentielle de passage ou de fuite des gaz. Il permet une liaison étanche entre deux métaux, deux céramiques ou entre un métal et une céramique, indépendamment de son état de surface.

Le joint peut être déposé par projection thermique sur une des deux surfaces à assembler ou bien réalisé de façon auto-structurante pour être ensuite mis en place entre les deux surfaces à assembler.

Le joint peut, de par sa nature solide et ses méthodes de mise en forme, être réalisé sur tout types de géométries et profils (tubes, surfaces concaves ou convexes, plans, ou leurs combinaisons) accessibles par les techniques de dépôts proposées.

L'épaisseur du joint est modulable depuis le micromètre jusqu'à plusieurs millimètres. Pour un même joint, cette épaisseur peut être constante ou variable de façon contrôlée dans la gamme proposée:

Le joint, de par la nature solide de sa matrice, ne présente pas de retrait ou plus généralement de variations dimensionnelles autres que celles produites par sa dilatation thermique lors de la mise en service.

Le joint peut être isolant électrique, conducteur électrique ou conducteur ionique en fonction du choix des couples matériaux de matrice, matériaux d'ajout.

Le matériau de la matrice peut être une céramique. Cela inclut les oxydes métalliques et de façon générique tous les matériaux non oxyde de type carbure, nitrure, siliciure, borure et autres ainsi que tous les mélanges ou composés définis obtenus à partir de ces constituants. On peut aussi utiliser des métaux ou des alliages métalliques.

Le matériau d'ajout peut être de manière générique un verre, un fondant céramique ou un alliage métallique.

Le joint conserve ses performances d'étanchéité après cyclage thermique de sa température d'utilisation à la température ambiante. Sa température d'utilisation peut couvrir une très large gamme, de 100°C à plus de 1500°C, en fonction du choix du couple de matériau de matrice et de matériau d'ajout.

Les domaines d'utilisation du joint peuvent concerner, de façon non exhaustive:
- les applications de frottement en température,
- la protection anti-corrosion,
- la brasure,
- les assemblages étanches à haute température pour les SOFC ou tout autre application.

## Revendications

1. Elément en matériau composite (1), le matériau composite comprenant une matrice (7) micro-fissurée sous la forme d'un réseau interconnecté tridimensionnel de micro-fissures (4) ouvert sur la surface de la matrice, un matériau d'ajout (6) constitué d'au moins un matériau choisi parmi un fondant céramique, un verre, un métal et un alliage métallique étant dispersé dans la matrice, le matériau d'ajout (6) étant un matériau qui, lorsque le matériau composite est porté à une température déterminée, ramollit et migre par capillarité dans le réseau de micro-fissures (4) vers ladite surface de l'élément, la quantité de matériau d'ajout dispersé initialement dans la matrice étant en proportion suffisante par rapport à la matrice pour venir napper une surface laissée ouverte (5) de l'élément en matériau composite et créer une barrière étanche aux gaz, dans lequel la matrice (7) est constituée d'au moins un matériau choisi parmi les métaux, les alliages métalliques, les oxydes métalliques, les carbures, les nitrures, les siliciures et les borures.

2. Element en matériau composite selon la revendication 1 , comprenant entre 5 % et 85 % en poids de matériau d'ajout.

3. Elément en matériau composite selon la revendication 1, dans lequel ladite température déterminée est une température comprise dans la gamme allant de 100°C à 1500°C.

4. Joint solide constitué à partir d'un élément en matériau composite (1) selon l'une quelconque des revendications 1 à 3, cet élément en matériau composite ayant été porté à ladite température déterminée pour qu' une nappe de matériau d'ajout (9) recouvre ladite surface laissée ouverte (5).

5. Joint solide selon la revendication 4, dans lequel l'élément en matériau composite (20) est un élément initialement déposé de manière adhérente par projection thermique sur une première pièce (21) , la nappe de matériau d'ajout (24) recouvrant ladite surface laissée ouverte pour assurer ladite barrière étanche aux gaz avec une deuxième pièce (22) en vis-à-vis de cette surface laissée ouverte.

6. Joint solide selon la revendication 4, dans lequel l'élément en matériau composite est un élément auto-structurant (30), c'est-à-dire un élément présentant initialement une surface laissée ouverte pour une première pièce (31) à joindre et une surface laissée ouverte pour une deuxième pièce (32) à joindre, une nappe de matériau d'ajout (33, 34) recouvrant les surfaces laissées ouvertes pour assurer une barrière étanche aux gaz avec chacune des deux pièces.

7. Procédé de fabrication d'un joint solide étanche entre une première pièce et une deuxième pièce, comprenant :
- une étape de fabrication d'un élement en matériau composite selon l'une quelconque des revendications 1 à 3, par projection thermique d'un matériau destiné à former la matrice céramique et d'un matériau destiné à former le matériau d'ajout, sur au moins une surface de réception (23) de la première pièce (21),
- une étape de placement d'une surface de ladite deuxième pièce (22) en vis-à-vis de ladite surface laissée ouverte de l'élément en matériau composite,
- une étape de mise de l'élément en matériau composite (20) à ladite température déterminée pour obtenir le nappage (24) de ladite surface laissée ouverte, ledit nappage (24) venant adhérer à la surface de ladite deuxième pièce (22) placée en vis-à-vis.

8. Procédé de fabrication d'un joint solide étanche entre une première pièce et une deuxième pièce, comprenant :
- une étape de fabrication d'un élément en matériau composite selon l'une quelconque des revendications 1 à 3, par projection thermique d'un matériau destiné à former à matrice céramique et d' un matériau destiné à former le matériau d'ajout, sur au moins une surface de réception, la surface de réception étant une interface de démoulage permettant la récupération de l'élément en matériau composite,
- une étape de récupération de l'élément en matériau composite,
- une étape d'interposition de l'élément en matériau composite (30), récupéré à l'étape de récupération, entre une première surface de la première pièce (31) et une deuxième surface de la deuxième pièce (32), la première surface et la deuxième surface étant vis-à-vis,
- la mise de l'élément en matériau composite (30) à ladite température déterminée pour obtenir les nappages des surfaces de l'élément en matériau composite laissées ouvertes, lesdits nappages (33, 34) venant adhérer à la première surface de la première pièce (31) d'une part et à la deuxième surface de la deuxième pièce (32) d'autre part.

9. Procédé selon l'une des revendications 7 ou 8, dans lequel la projection thermique est choisie parmi les techniques de projection plasma, de projection par flamme oxyacéthylénique, de projection HVOF, de projection HVAF, de projection par canon à détonation, de projection par arc fil et arc poudre, de projection par plasma d'arc à courant continu, de projection par plasma inductif, de projection dynamique à froid et une combinaison d'au moins deux de ces techniques.

10. Procédé selon l'une quelconque des revendications 7 à 9, dans lequel un matériau porogène est également projeté au cours de l'étape de projection thermique.

11. Procédé selon l'une quelconque des revendications 7 ou 8 dans lequel une pression est exercée entre la première et la deuxième pièce, tendant à rapprocher la première surface de la première pièce de la deuxième surface de la deuxième pièce, lors de la mise à ladite température déterminée, afin d'améliorer l'adhérence du nappage ou des nappages.

## Claims

1. Composite material member (1), the composite material comprising a microfissured matrix (7) in the form of a three-dimensional interconnected network of microfissures (4) open at the surface of the matrix, an additive material (6) consisting of at least one material selected from a ceramic flux, a glass, a metal, or metal alloy being dispersed within the matrix, the additive material (6) being a material which, when the composite material is brought to a predetermined temperature, softens and migrates by capillary action in the network of microfissures (4) towards said surface of the member, the quantity of additive material dispersed initially in the matrix being of a sufficient proportion compared to the matrix to coat the exposed surface (5) of the composite material member and create a gas-proof barrier, wherein the matrix (7) is made of at least one material selected from metals, metal alloys, metal oxides, carbides, nitrides, silicides or borides.

2. Composite material member according to claim 1, comprising between 5 % and 85 % by weight additive material.

3. Composite material member according to claim 1, wherein said predetermined temperature is a temperature within the range from 100°C to 1500°C.

4. Solid joint formed from a composite material member (1) according to any one of claims 1 to 3, this composite material member having been brought to said predetermined temperature so that a coating of additive material (9) covers said exposed surface (5).

5. Solid joint according to claim 4, wherein the composite material member (20) is an member initially deposited in an adherent manner by thermal spraying on a first part (21), the coating of additive material (24) covering said exposed surface to provide said gas-proof barrier together with a second part (22) opposite said exposed surface.

6. Solid joint according to claim 4, wherein the composite material member is a self-structuring member (30), i.e. an member initially having an exposed surface for a first part (31) to be joined and an exposed surface for a second part (32) to be joined, a coating of additive material (33, 34) covering the exposed surfaces to provide a gas-proof barrier together with each of the two parts.

7. Process for producing a leak-proof solid joint between a first part and a second part comprising:
- a step of producing a composite material member according to any one of claims 1 to 3 by thermal spraying a material for forming the ceramic matrix and a material for forming the additive material on at least one receptive surface (23) of the first part (21),
- a step of placing a surface of said second part (22) opposite said exposed surface of the composite material member,
- a step of bringing the composite material member (20) to said temperature to achieve the coating (24) of said exposed surface, said coating (24) bonding to the surface of said second part (22) placed opposite.

8. Process for producing a leak-proof solid joint between a first part and a second part comprising:
- a step of producing a composite material member according to any one of claims 1 to 3 by thermal spraying a material for forming the ceramic matrix and a material for forming the additive material on at least one receptive surface, the receptive surface being a demoulding interface allowing the composite material member to be recovered,
- a step of recovering the composite material member,
- a step of interposing the composite material member (30), recovered during the step of recovery, between a first surface of the first part (31) and a second surface of the second part (32), the first and second surfaces being opposite each other,
- bringing the composite material member (30) to said temperature in order to achieve the coatings of the exposed surfaces of the composite material member, said coatings (33, 34) bonding to both the first surface of the first part (31) and the second surface of the second part (32).

9. Process according to either claim 7 or claim 8, wherein the kind of thermal spraying employed is selected from plasma spraying, oxy-acetylene flame spraying, HVOF spraying, HVAF spraying, detonation gun spraying, wire arc and powder arc spraying, DC plasma arc spraying, inductive plasma spraying, dynamic cold spraying, or a combination of at least two of these methods.

10. Method according to any one of claims 7 to 9, wherein a pore-forming material is also sprayed during the thermal spraying step.

11. Method according to either claim 7 or claim 8, wherein pressure is exerted on the first and second part, in order to bring the first surface of the first part closer to the second surface of the second part, while the composite material is being brought to said predetermined temperature, in order to improve the bonding of the coating or coatings.

## Patentansprüche

1. Verbundmaterial-Element (1) , wobei das Verbundmaterial aufweist:
eine Mikroriss-Matrix (7) in Form eines dreidimensionalen zusammenhängenden Netzes von Mikrorissen (4), das an der Oberfläche der Matrix offen ist,
ein in der Matrix dispergiertes Zusatzmaterial (6) , das aus mindestens einem Material der folgenden Gruppe besteht: keramisches Schmelzmittel, Glas, Metall und Metalllegierung, wobei das Zusatzmaterial (6) ein Material ist, das, wenn das Verbundmaterial auf eine vorgegebene Temperatur gebracht wird, erweicht und durch Kapillarwirkung in dem Mikroriss-Netz (4) zu der Oberfläche des Elements wandert, wobei die Menge des anfänglich in der Matrix dispergierten Zusatzmaterials in einem ausreichenden Verhältnis bezüglich der Matrix vorhanden ist, um eine offen gelassene Oberfläche (5) des Verbundmaterial-Elements zu beschichten und eine für Gase dichte Barriere zu erzeugen,
wobei die Matrix (7) aus mindestens einem Material der folgenden Gruppe besteht: Metalle, Metalllegierungen, Metalloxide, Karbide, Nitride, Silicide und Boride.

2. Verbundmaterial-Element nach Anspruch 1, aufweisend zwischen 5 Gewichtsprozent und 85 Gewichtsprozent Zusatzmaterial.

3. Verbundmaterial-Element nach Anspruch 1, in welchem die vorgegeben Temperatur eine Temperatur in dem Bereich von 100°C bis 1500°C ist.

4. Festdichtung, die ausgehend von einem Verbundmaterial-Element (1) nach einem der Ansprüche 1 bis 3 gebildet ist, wobei dieses Verbundmaterial-Element auf die vorgegebene Temperatur gebracht worden ist, damit eine Schicht aus Zusatzmaterial (9) die offen gelassenen Oberfläche (5) bedeckt.

5. Festdichtung nach Anspruch 4, in welcher das Verbundmaterial-Element (20) ein durch thermisches Sprühen auf anhaftende Weise auf einem ersten Stück (21) anfänglich abgeschiedenes Element ist, wobei die Schicht Zusatzmaterial (24) die offen gelassene Oberfläche bedeckt, um mit einem dieser offen gelassenen Oberfläche gegenüber angeordneten zweiten Stück (22) die für Gase dichte Barriere sicherzustellen.

6. Festdichtung nach Anspruch 4, in welchem das Verbundmaterial-Element ein selbst-strukturierendes Element (30) ist, das heißt, ein Element, das anfänglich eine offen gelassene Oberfläche für ein erstes anzufügendes Stück (31) und eine offen gelassene Oberfläche für ein zweites anzufügendes Stück (32) aufweist, wobei eine Schicht Zusatzmaterial (33,34) die offen gelassenen Oberflächen bedeckt, um mit jedem der zwei Stücke eine für Gase dichte Barriere sicherzustellen.

7. Verfahren zur Herstellung einer Festdichtung zwischen einem ersten Stück und einem zweiten Stück, aufweisend:
- einen Schritt der Herstellung eines Verbundmaterial-Elements nach einem der Ansprüche 1 bis 3 durch thermisches Sprühen eines Materials, das die keramische Matrix bilden soll, und eines Materials, das das Zusatzmaterial bilden soll, auf mindestens eine Empfangsoberfläche (23) des ersten Stücks (21),
- einen Schritt der Anordnung einer Oberfläche des zweiten Stücks (22) gegenüber der offen gelassenen Oberfläche des Verbundmaterial-Elements,
- einen Schritt der Anwendung der vorgegebenen Temperatur auf das Verbundmaterial-Element (20), um die Beschichtung (24) der offen gelassenen Oberfläche zu erzielen, wobei die Beschichtung (24) an der Oberfläche des gegenüber angeordneten zweiten Stücks (22) anhaften wird.

8. Verfahren zur Herstellung einer Festdichtung zwischen einem ersten Stück und einem zweiten Stück, aufweisend:
- einen Schritt der Herstellung eines Verbundmaterial-Elements nach einem der Ansprüche 1 bis 3 durch thermisches Sprühen eines Materials, das die keramische Matrix bilden soll, und eines Materials, das das Zusatzmaterial bilden soll, auf mindestens eine Empfangsoberfläche, wobei die Empfangsoberfläche eine Entformungsgrenzfläche ist, die die Wiedergewinnung des Verbundmaterial-Elements erlaubt,
- einen Schritt der Niedergewinnung des Verbundmaterial-Elements,
- einen Schritt der Anordnung des im Wiedergewinnungsschritt wiedergewonnenen Verbundmaterial-Elements (30) zwischen einer ersten Oberfläche des ersten Stücks (31) und einer zweiten Oberfläche des zweiten Stücks (32), wobei die erste Oberfläche und die zweite Oberfläche gegenüberliegen,
- Anwenden der vorgegebenen Temperatur auf das Verbundmaterial-Element (30), um die Beschichtungen der offen gelassenen Oberflächen des Verbundmaterial-Elements zu erzielen, wobei die Beschichtungen (33,34) an der ersten Oberfläche des ersten Stücks (31) einerseits und an der zweiten Oberfläche des zweiten Stücks (32) andererseits anhaften werden.

9. Verfahren nach einem der Ansprüche 7 oder 8, in welchem das thermische Sprühen aus den folgenden Techniken ausgewählt ist: Plasmasprühen, Sprühen mit Oxyacetylen-Flamme, HVOF-Sprühen, HVAF-Sprühen, Sprühen mit Explosionskanone, Sprühen mit Lichtbogendraht und Lichtbogenpulver, Sprühen mit Gleichstrom-Lichtbogenplasma, Sprühen mit induktivem Plasma, dynamisches kaltes Sprühen, und eine Kombination aus mindestens zwei dieser Techniken.

10. Verfahren nach einem der Ansprüche 7 bis 9, in welchem im Verlaufe des Schritts des thermischen Sprühens außerdem ein Treibmittel gesprüht wird.

11. Verfahren nach einem der Ansprüche 7 oder 8, in welchem ein Druck zwischen dem ersten und dem zweiten Stück ausgeübt wird, der darauf gerichtet ist, beim Anwenden der vorgegebenen Temperatur die erste Oberfläche des ersten Stücks an die zweite Oberfläche des zweiten Stücks anzunähern, um das Anhaften der Beschichtung oder der Beschichtungen zu verbessern.
